# EUROPÄISCHE PATENTANMELDUNG

(11) **EP 1 238 578 A2**
(43) Veröffentlichungstag der Anmeldung: **11.09.2002**
(21) Anmeldenummer: 02004912.8
(22) Anmeldetag: 05.03.2002
(51) Int. Cl.: A01C 17/00

(54) **Vefahren zum Verteilen von Streugut und Zentrifugalstreuer zur Durchführung des Verfahrens**

(30) Priorität: 10.03.2001 DE 10111553
(71) Anmelder: RAUCH LANDMASCHINENFABRIK GMBH, D-76547 Sinzheim (DE)
(72) Erfinder: Rauch, Norbert, 76547 Sinzheim (DE)
(74) Vertreter: Lichti, Heiner, Dipl.-Ing.

(57) **Zusammenfassung**

Bei einem Verfahren zum Verteilen von Streugut mittels eines Zentrifugalstreuers mit einem Streugut-Behälter und wenigstens zwei gegensinnig umlaufenden Streuscheiben wird das Streugut jeder Streuscheibe über jeweils zwei getrennt steuerbare Dosieröffnungen am Behälter zugeführt. Die Streuscheiben geben das Streugut unter einem großen Streuwinkel derart ab, daß beim Normalstreuen auf einer einstellbaren Streubreite sich die von den beiden Streuscheiben erzeugten Streufächer in Fahrtrichtung hinter dem Zentrifugalstreuer symmetrisch im wesentlichen vollständig überlappen. Um bei einem solchen Verfahren eine asymmetrische Änderung der Streubreite, beispielsweise für das Grenzstreuen, Randstreuen und das halbseitige Streuen, oder asymmetrische Düngergaben in einfacher Weise zu ermöglichen, ist vorgesehen, daß zur einseitigen Reduzierung der Überlappung der Streuwinkel wenigstens einer Streuscheibe durch Steuerung der ihr zugeordneten Dosieröffnungen von innen nach außen verkleinert und zugleich der Streuwinkel und/oder die Streubreite an der anderen Streuscheibe reduziert wird. Ferner wird ein zur Durchführung des Verfahrens geeigneter Zweischeibenstreuer beschrieben.

## Beschreibung

Die Erfindung betrifft ein Verfahren zum Verteilen von Streugut mittels eines Zentrifugalstreuers mit einem Streugut-Behälter und wenigstens zwei gegensinnig umlaufenden, mit Wurfflügeln versehenen Streuscheiben, denen das Streugut über jeweils zwei getrennt steuerbare Dosieröffnungen am Behälter zugeführt wird und die das Streugut unter einem großen Streuwinkel abgeben derart, daß beim Normalstreuen auf einer einstellbaren Streubreite sich die von den beiden Streuscheiben erzeugten Streufächer in Fahrtrichtung hinter dem Zentrifugalstreuer symmetrisch im wesentlichen vollständig überlappen. Ferner betrifft die Erfindung einen Zentrifugalstreuer zur Durchführung des Verfahrens.

Zentrifugalstreuer dienen insbesondere zum Verteilen von Dünger auf landwirtschaftlichen Anbauflächen oder von Winter-Streumitteln auf Verkehrsflächen. Beim Verteilen von Dünger werden aus Umweltschutzgründen und aufgrund des Kostendrucks, dem die landwirtschaftlichen Betriebe ausgesetzt sind, eine hohe Verteilgenauigkeit des Düngers gefordert, und zwar bei allen Betriebsarten des zur Verteilung dienenden Streuers.

Bei der Düngerverteilung haben sich heute im wesentlichen Zweischeibenstreuer durchgesetzt, die einerseits die Voraussetzung für eine hohe Verteilgenauigkeit bieten, andererseits eine hohe Flächenleistung ermöglichen. Gegenüber anderen Streusystemen zeichnen sie sich durch eine vergleichsweise einfache Handhabung und niedrige Unterhaltskosten aus. Die bekannten Zweischeibenstreuern lassen sich im wesentlichen in zwei Systeme mit unterschiedlichen Streuprinzipien unterteilen (EP-B1-0 540 889). Bei dem ersten System laufen die beiden Streuscheiben derart gegensinnig um, daß sie in der Mitte entgegen der Fahrtrichtung drehen, während sie bei dem anderen System in der Mitte in Fahrtrichtung drehen.

Bei dem ersten System werden zwei im wesentlichen nebeneinander liegende Streufächer erzeugt, die sich in der Mitte geringfügig überlappen und außen bis in den Bereich der Verbindungslinie der beiden Scheiben reichen. Es entsteht ein im wesentlichen trapezförmiges Streubild mit flach abfallenden Flanken, das sein Plateau in der Mitte des Streuers hat. Bei dem zweiten System, auf das sich die Erfindung vornehmlich, aber nicht ausschließlich bezieht, werden Streufächer erzeugt, die sich hinter dem Zweischeibenstreuer weitgehend vollständig überlappen und zu einem breiten dreieckförmigen Streubild führen. In beiden Fällen erfolgt im Fahrgassenbetrieb bei der Anschlußfahrt eine Überlappung nur im Bereich der Flanken der jeweils einander zugekehrten Streufächer. Der Vorteil des zweiten Systems besteht, insbesondere darin, daß die Verteilgenauigkeit bei einem großen Streuwinkel der beiden Streufächer besser ist als bei dem ersten System.

Die vorgenannten Feststellungen gelten für das Normalstreuen, bei dem also dem zweiten System der Vorzug zu geben ist. Beim Grenz- oder Randstreuen, wie auch beim Streuen auf einer Teilbreite, bei Streuvorgängen also, bei denen die Streubreite auf nur einer Seite über Zwischenwerte bis zum Wert Null reduziert und - im Falle des Grenzstreuens bei halbem Fahrgassenabstand - ein anderes Streubild erzeugt werden muß, um die Nährstoffversorgung der Pflanzen bis zur Feldgrenze sicherzustellen, ist das zweite System wegen der fast vollständigen Überlappung der beiden Streufächer dem ersten System unterlegen. Dies gilt auch, wenn bei großen Arbeitsbreiten eine unterschiedliche Düngergabe rechts zu links gegeben werden soll, was nur bei einer geringen Überlappung der Streufächer möglich ist.

Bei Zweischeibenstreuern, die nach dem ersten Prinzip arbeiten, also zwei sich nur im mittleren Bereich überlappende Streufächer erzeugen, ist es bekannt (WO 96/32005) jeder Streuscheibe zwei Auslauföffnungen zuzuordnen, die im wesentlichen spiegelsymmetrisch zu einem Radius der Streuscheibe im Behälterboden angeordnet sind und deren freier Querschnitt mittels Dosierschiebern gesteuert wird. Ferner ist den Dosieröffnungen ein Absperrschieber zugeordnet, mit dem unter Beibehaltung der Dosierstellung der Düngerstrom vollständig unterbrochen werden kann. Beim Normalstreuen werden je nach Streubreite und Streumenge die jeder Streuscheibe zugeordneten beiden Dosieröffnungen im gleichen Sinn gesteuert. Bei bestimmten Streugutarten kann dies zu einem ungleichmäßigen Streubild führen, was dadurch ausgeglichen wird, daß die beiden Dosieröffnungen für jede Streuscheibe unterschiedlich gesteuert werden. Zur Reduzierung der Streubreite auf nur einer Seite wird eine der Dosieröffnungen auf dieser Seite geschlossen und tritt der Dünger nur über die andere Dosieröffnung auf die Streuscheibe aus. Während für alle vorgenannten Streuarten die Dosieröffnungen von der Drehachse der Streuscheibe aus nach außen geöffnet werden, ist für das Grenzstreuen eine umgekehrte Öffnungsbewegung vorgesehen, so daß der Aufgabepunkt des Düngers auf der Streuscheibe weiter außen liegt. Alle Maßnahmen zur einseitigen Reduzierung der Streubreite bzw. zur einseitigen Änderung des Streubildes beschränken sich auf die beiden Dosieröffnungen nur der einen Streuscheibe auf dieser Seite.

Bei Zweischeibenstreuern mit in der Mitte in Fahrtrichtung drehenden Streuscheiben, bei denen sich die beiden Streufächer stets weitgehend überlappen, versagen die vorgenannten Maßnahmen. Stattdessen ist es bekannt (DE-C2-34 20 617), zur einseitigen Reduzierung der Streubreite den gesamten Streuer zu dieser Seite hin zu neigen. Dadurch wird aber das Streubild über die gesamte Streubreite erheblich verändert und die Verteilgenauigkeit schlechter. Auch ist ein einwandfreies Grenzstreuen mit entsprechend steilflankigem Streubild an der Feldgrenze nicht zu erreichen. Bei einem anderen bekannten Zweischeibenstreuer (EP-A1 0 876 747) sind jeder Streuscheibe gleichfalls zwei zu einem Radius der Streuscheibe spiegelsymmetrisch angeordnete Dosieröffnungen vorgesehen. Zur einseitigen Reduzierung der Streubreite sind auf dieser Seite Umlenkeinrichtungen angebaut, die mehrere Leitschirme aufweisen. Auf diese Weise wird der Streuwinkel des Streufächers von außen nach innen verkleinert. Zugleich werden die Dosieröffnungen der gegenüberliegenden Streuscheibe geschlossen, so daß diese faktisch funktionslos sind. Abgesehen von dem konstruktiven Aufwand und der Tatsache, daß eine Streubreitenreduzierung nur auf der einen Seite möglich ist, führt auch dies zu Ungenauigkeiten in der Düngerverteilung.

Schließlich ist es bekannt (EP-A1-0 880 877) die Drehrichtung der Streuscheiben umzukehren, um dadurch die Streubreite zu beeinflussen, wobei zugleich die auf den Streuscheiben angeordneten Wurfschaufeln auf der in Drehrichtung jeweils wirksamen Seite unterschiedlich gestaltet sind. Zum Drehrichtungswechsel muß die Zapfwelle des Traktors stillstehen und der Traktor angehalten werden. Ferner sind für das Grenzstreuen besondere Leitschirme vorgesehen. Auch diese Maßnahmen sind aufwendig und zwingen vor allem zu einem Stillstand des Traktors beim Umstellen von Normalstreuen auf eine andere Streuart, was für den Landwirt außerordentlich umständlich ist.

Der Erfindung liegt die Aufgabe zugrunde, bei einem Verteilverfahren, bei dem sich für das Normalstreuen die Streufächer der beiden Streuscheiben weitgehend überlappen, eine asymmetrische Änderung der Streubreite und/oder unterschiedliche Düngergaben auf beiden Seiten ohne Stillstand des Traktors und ohne zusätzliche Anbauten zu ermöglichen und ohne die Verteilgenauigkeit nennenswert zu beeinträchtigen. Unter asymmetrischer Änderung der Streubreite wird im Sinne der Erfindung die wahlweise und nur zeitweilige Reduzierung der Überlappung während des Normalstreuens zur Anpassung an einen lokal wechselnden Düngerbedarf auf der Arbeitsbreite sowie jede einseitige Reduzierung der Streubreite für das Grenz-, oder Randstreuen oder das Halbseitenstreuen verstanden.

Bei einem Verfahren gemäß dem Oberbegriff des Anspruchs 1 wird diese Aufgabe erfindungsgemäß dadurch gelöst, daß zur einseitigen Reduzierung der Überlappung der Streufächer der Streuwinkel wenigstens einer Streuscheibe durch Steuerung der ihr zugeordneten Dosieröffnungen von innen nach außen verkleinert wird, und daß zugleich der Streuwinkel und/oder Streubreite an der anderen Streuscheibe reduziert wird.

Bei dem erfindungsgemäßen Verfahren wird zur asymmetrischen Änderung der Streubreite das Ausmaß der Überlappung der Streufächer geändert, indem der Streuwinkel der einen Streuscheibe von innen nach außen verkleinert wird, so daß sich die Streufächer nicht mehr annähernd vollständig, sondern nur noch teilweise, gegebenenfalls auch nur noch geringfügig oder gar nicht überlappen. Dadurch entsteht eine Verteilung, wie sie ähnlich bei dem Verteilprinzip verwirklicht ist, bei dem sich die Streufächer auch beim Normalstreuen nur wenig überlappen. Die notwendigen Eingriffe beschränken sich auf eine entsprechende Steuerung der Dosieröffnungen nur einer Streuscheibe, ohne daß gesonderte Anbauten, eine Drehrichtungsumkehr der Streuscheiben oder dergleichen notwendig sind.

Durch die vorgenannten Maßnahmen ist es nicht nur möglich, die Streubreite auf nur einer Seite des Streuers etwa für das Grenz- oder Randstreuen zu reduzieren, sondern insbesondere auch beim Normalstreuen auf der voreingestellten Arbeitsbreite die Düngergabe auf einen rechts und links variierenden Düngerbedarf des Bodens einzustellen und diese Einstellung während der Fahrt zu ändern.

Diesem Zweck dient insbesondere die weitere Maßnahme, wonach der Streuwinkel der anderen Streuscheibe von innen nach außen verkleinert wird. Auch hierbei kann die Verkleinerung des Streuwinkels dieser Streuscheibe durch Steuerung der ihr zugeordneten Dosieröffnungen erfolgen.

Vorteilhafterweise wird zumindest die eine der beiden Dosieröffnungen auf der Seite des reduzierten Streuwinkels geschlossen und mit der anderen Dosieröffnung der für die Aufrechterhaltung der Streumenge maßgebliche Dünger-Massenstrom nachgeführt.

In einer weiteren Ausführung werden zur Reduzierung der Überlappung die Streuwinkel beider Streuscheiben verkleinert. Dies kann dadurch geschehen, daß je eine der Dosieröffnungen auf beiden Seiten geschlossen wird und mit der anderen Dosieröffnung der für die Aufrechterhaltung der Streumenge maßgebliche Dünger-Massenstrom nachgeführt wird. Welche der beiden jeder Streuscheibe zugeordneten Dosieröffnungen geschlossen wird, richtet sich nach dem Drehsinn der Streuscheiben mit Bezug auf die Fahrtrichtung. Somit ist es möglich, verschiedene Düngergaben rechts oder links zu streuen.

Bei Zweischeibenstreuern, deren Streuscheiben auf den einander zugekehrten Seiten in Fahrtrichtung umlaufen und deren Streufächer sich weitgehend überlappen, wird zumindest die in Drehrichtung zweite Dosieröffnung auf der Seite mit dem reduzierten Streuwinkel geschlossen. Auf diese Weise werden bei Reduzierung der Streubreite auf der einen Seite und Aufrechterhaltung der Streubreite auf der anderen Seite die Streufächer in der Mitte nicht oder nur noch wenig überlappt.

Beim nur halbseitigen Streuen wird der Streuwinkel der auf dieser Seite angeordneten Streuscheibe praktisch auf Null reduziert, d.h. es werden beide Dosieröffnungen dieser Streuscheibe geschlossen. Zugleich wird der Streuwinkel der anderen Streuscheibe von innen nach außen reduziert, indem beispielsweise die in Drehrichtung zweite Dosieröffnung geschlossen wird, während zur Aufrechterhaltung der Streumenge auf der bestreuten Seite die in Drehrichtung erste Dosieröffnung weiter geöffnet wird.

Das Verfahren läßt sich auch bei Zentrifugalstreuern anwenden, deren Streuscheiben auf den einander zugekehrten Seiten entgegen der Fahrtrichtung umlaufen. Um bei solchen Zweischeibenstreuern eine annähernd vollständige Überlappung der beiden Streufächer zu erreichen, muß vermieden werden, daß die von einer Streuscheibe abgeworfenen Düngerpartikel auf die andere Streuscheibe auftreffen. Dies erfordert also einen entsprechend großen Abstand der Streuscheiben voneinander.

Bei einem solchen Streuer wird das erfindungsgemäße Verfahren zur einseitigen Reduzierung der Streubreite dadurch verwirklicht, daß zumindest die in Drehrichtung erste Dosieröffnung auf der Seite des reduzierten Streuwinkels geschlossen wird.

Zum halbseitigen Streuen werden - unabhängig von der Drehrichtung der Streuscheiben - vorzugsweise die beiden auf dieser Seite liegenden Dosieröffnungen geschlossen, so daß nur noch die andere Streuscheibe einen Streufächer auf der halben Streubreite erzeugt, wobei auch an dieser Streuscheibe vorzugsweise eine Dosieröffnung geschlossen wird und der Dünger-Massenstrom ausschließlich über die andere Dosieröffnung zur Aufrechterhaltung der Streumenge vergrößert wird. Welche der beiden Dosieröffnungen auf der bestreuten Seite geschlossen wird, richtet sich nach dem Drehsinn der Scheiben bezüglich der Fahrtrichtung.

Ferner kann bei beiden Streutypen zur Lageveränderung des Streuwinkels der Aufgabepunkt des Streuguts verlagert und dadurch wiederum die Überlappung der Streufächer variiert werden.

Bei einem Zweischeibenstreuer mit innenseitig in Fahrtrichtung drehenden Streuscheiben kann zum Grenzstreuen die Drehzahl der grenznahen Streuscheibe reduziert und zugleich die in Drehrichtung zweite Dosieröffnung für die grenzferne Streuscheibe geschlossen werden. Zusätzlich können die Dosieröffnungen der grenznahen Streuscheibe und damit der Aufgabepunkt gegen die Drehrichtung verlagert werden.

Bei einem Zweischeibenstreuer mit innenseitig gegen die Fahrtrichtung drehenden Streuscheiben kann gleichfalls die Drehzahl der grenznahen Streuscheibe reduziert werden. In diesem Fall wird jedoch zugleich die in Drehrichtung erste Dosieröffnung für die grenzferne Streuscheibe geschlossen und können auch hier die Dosieröffnungen der grenznahen Streuscheibe und damit der Aufgabepunkt entgegen der Drehrichtung verlagert werden. Weitere, wenn auch nicht zwingende Maßnahmen bestehen darin, daß zur einseitigen Reduzierung der Streubreite der Streufächer dieser Streuscheibe durch Leiteinrichtungen von außen nach innen eingeengt wird. Zugleich kann der Streuwinkel von außen nach innen reduziert werden.

Die Erfindung betrifft ferner einen Zentrifugalstreuer zur Durchführung des zuvor beschriebenen Verfahrens. Ein solcher Zentrifugalstreuer weist einen Streugut-Behälter, wenigstens zwei darunter angeordnete, gegenseitig umlaufende Streuscheiben mit Wurfflügeln auf, denen jeweils zwei steuerbare Dosieröffnungen im Behälter zugeordnet sind, wobei den Dosieröffnungen wiederum getrennt steuerbare Dosierschieber und Absperrschieber zugeordnet sind (EP-A1 0 876 747). Ein solcher Zentrifugalstreuer zeichnet sich erfindungsgemäß dadurch aus, daß den beiden Dosieröffnungen für jede Streuscheibe ein gemeinsamer Dosierschieber und wenigstens einer Dosieröffnung ein Absperrschieber zugeordnet ist.

Auf diese Weise lassen sich beide Dosieröffnungen zwischen einer Schließlage und einer maximalen Öffnungsweite mit maximalem Massenstrom steuern, während mit dem Absperrschieber unter Beibehaltung des eingestellten Massenstroms an der einen Dosieröffnung die andere Dosieröffnung geschlossen werden kann. Die nicht geschlossene Dosieröffnung läßt sich weiterhin über ihren gesamten Querschnitt zur Änderung des Massenstroms steuern.

Mit Vorteil ist vorgesehen, daß den beiden Dosieröffnungen jeder Streuscheibe ein gemeinsamer Dosierschieber und wenigstens einer Dosieröffnung ein Absperrschieber zugeordnet ist, wobei weiterhin von Vorteil ist, wenn der Boden um eine mit der Achse der Streuscheiben zusammenfallende Achse drehbar ist und die Dosier- und Absperrschieber zusammen mit dem Boden verdrehbar sind. Auf diese Weise läßt sich der Aufgabepunkt problemlos in oder entgegen der Fahrtrichtung, gegebenenfalls unter Beibehaltung der Positionen von Dosier- und Absperrschieber verlagern.

In weiterhin bevorzugter Ausführung ist vorgesehen, daß bei Bewegung des Absperrschiebers zum Schließen der einen Dosieröffnung zugleich der Dosierschieber die andere Dosieröffnung zur Beibehaltung des voreingestellten Massenstroms weiter öffnet.

Auf diese Weise läßt sich bei Änderung der Überlappung der Streufächer die Streumenge erhalten.

Bei bekannten Zweischeibenstreuer mit je zwei Dosieröffnungen für jede Streuscheibe und je einem Rührwerk ist es zweckmäßig, wenn jedes Rührwerk von einem im Behälter angeordneten Hydromotor angetrieben ist und ferner die Hydromotoren unabhängig voneinander steuerbar sind, um die Drehzahl der jeweiligen Einstellung von Dosier- und Absperrschieber anzupassen und den Dünger im Streugut-Behälter schonend im Fluß zu halten.

Bei Zweischeibenstreuern, deren Streuscheiben an den einander zugekehrten Seiten entgegen der Fahrtrichtung umlaufen, setzt eine weitgehend vollständige Überlappung der Streufächer einen entsprechenden Abstand der Streuscheiben voraus. Er sollte wenigstens 10cm größer als der äußere Flugkreisdurchmesser der Streuscheiben sein. Im übrigen hängt dieser Minimalabstand von der Arbeitsbreite des jeweiligen Streuers ab, so kann er durchaus auch 50 bis 80cm größere als der äußere Flugkreisdurchmesser der Streuscheiben sein. Eine größtmögliche Arbeitsbreite mit weitgehend vollständiger Überlappung der Streufächer läßt sich erreichen, wenn der Abstand der Drehachsen wenigstens doppelt so groß ist wie der äußere Flugkreisdurchmesser der Streuscheiben.

Nachstehend ist die Erfindung anhand einiger in der Zeichnung schematisch gezeigter Ausführungsbeispiele erläutert. Zu der Zeichnung zeigen:
- Fig.1: das Streubild eines Zweischeibenstreuers mit sich weitgehend überlappenden Streufächern beim Normalstreuen;
- Fig.1a: die Streugutverteilung bei einer Arbeitsweise gemäß Fig.1;
- Fig.2: das Streubild bei einseitiger Reduzierung der Überlappung;
- Fig.3: das Streubild bei beidseitiger Reduzierung der Überlappung;
- Fig.3a: die Streugutverteilung bei einer Arbeitsweise gemäß Fig.3;
- Fig.4: das Streubild beim halbseitigen Streuen;
- Fig.4a: die Streugutverteilung bei einer Arbeitsweise gemäß Fig.4;
- Fig.5: das Streubild beim Grenzstreuen;
- Fig.5a: die Streugutverteilung bei einer Arbeitsweise gemäß Fig.5;
- Fig.5b: das Streubild beim Grenzstreuen mit gleichzeitiger Reduzierung des Streuwinkels auf der Grenzseite;
- Fig.6: ein der Fig.1 entsprechendes Streubild bei anderer Relation zwischen Fahrtrichtung und Drehsinn der Streuscheiben;
- Fig.6a: die Streugutverteilung bei einer Arbeitsweise gemäß Fig.6;
- Fig.7: das Streubild bei einseitiger Reduzierung der Überlappung;
- Fig.8: das Streubild bei beidseitiger Reduzierung der Überlappung;
- Fig.8a: die Streugutverteilung bei einer Arbeitsweise gemäß Fig.8;
- Fig.9: das Streubild beim halbseitigen Streuen;
- Fig.9a: die Streugutverteilung bei einer Arbeitsweise gemäß Fig.9;
- Fig.10: das Streubild beim Grenzstreuen;
- Fig.10a: die Streugutverteilung beim Grenzstreuen;
- Fig.11: das Streubild beim Grenzstreuen mit gleichzeitiger Reduzierung des Streuwinkels auf der Grenzseite;
- Fig.11a: die Streugutverteilung bei einer Arbeitsweise gemäß Fig.11.

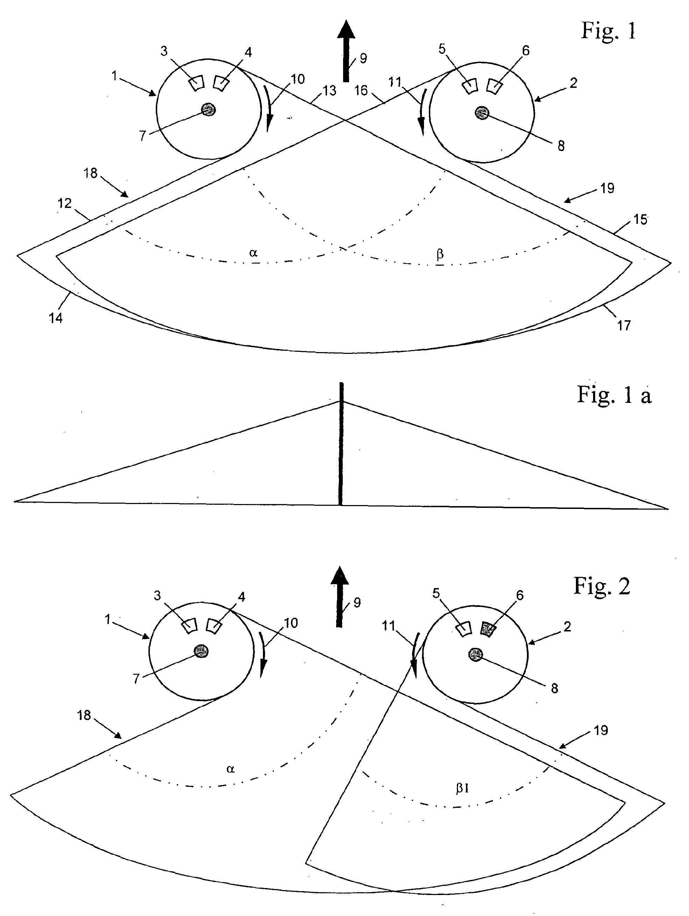

In der Zeichnung sind lediglich die beiden Streuscheiben 1, 2 eines Zweischeibenstreuers dargestellt, die im übrigen mit nicht gezeigten Wurfschaufeln ausgerüstet sind. Ferner sind die im Boden des Vorratsbehälters angeordneten Dosieröffnungen wiedergegeben, wobei jeder Streuscheibe 1, 2 zwei Dosieröffnungen 3, 4 bzw. 5, 6 zugeordnet sind. Den einer Streuscheibe zugeordneten beiden Dosieröffnungen sind ein gemeinsamer Dosierschieber und wenigstens einer der Dosieröffnungen ein Absperrschieber zugeordnet. Diese sind von herkömmlichem Aufbau und deswegen nicht näher beschrieben. Beim gezeigten Ausführungsbeispiel sind die Dosieröffnungen konzentrisch zu den Achsen 7, 8 der Streuscheiben 1, 2 angeordnet. Die Fahrtrichtung des den Zweischeibenstreuer aufnehmenden Traktors ist mit dem Richtungspfeil 9 wiedergegeben. Bei den in den Fig.1 bis 5 gezeigten Ausführungsbeispielen drehen die Streuscheiben 1, 2 um ihre Achsen 7, 8 gemäß den Richtungspfeilen 10, 11. Sie laufen also im Raum zwischen den Scheiben entgegen der Fahrtrichtung 9 um. Die Darstellungen sind der Anschaulichkeit wegen sehr schematisch und im Maßstab stark verzerrt.

Der über die Dosieröffnungen 3, 4 auf die Streuscheibe 1 aufgegebene Dünger wird zentrifugal beschleunigt und in Form eines Streufächers abgegeben, der durch die idealerweise tangentialen Linien 12, 13 und eine bogenförmige Linie 14 begrenzt ist. In gleicher Weise erzeugt die Streuscheibe 2 einen Streufächer mit den zur Scheibe im wesentlichen tangentialen Begrenzungslinien 15, 16 und der bogenförmigen Begrenzungslinie 17. Der von der Streuscheibe 1 abgegebene Streufächer ist nachfolgend mit 18, der von der Streuscheibe 2 abgegebene Streufächer mit 19 bezeichnet. Die Form der Streufächer wird durch den Streuwinkel α bzw. β bestimmt, unter welchem der Dünger die Streuscheiben 1 bzw. 2 verläßt. Die Lage der Streufächer auf dem Boden wird wiederum durch die absolute Größe des Streuwinkels und durch dessen Lage bezüglich der Streuscheibe bestimmt. Weitere Abhängigkeiten ergeben sich von der Drehzahl der Streuscheiben und der konstruktiven Ausbildung und Anordnung der Wurfschaufeln auf der Streuscheibe.

Bei dem in Fig.1 gezeigten Normalstreuen überlappen sich die Streufächer 18, 19 der beiden Streuscheiben 1, 2 weitestgehend. Durch diese Überlappung wird eine dreieckförmige Streugutverteilung gemäß Fig.1a erzielt. Die Gesamtstreubreite hängt von den oben genannten Einflußfaktoren ab, während die Streumenge (Höhe des Dreiecks) über die Dosieröffnungen 3, 4 bzw. 5, 6 gesteuert wird. Beim Anschlußfahren werden die Streufächer derart überlappt, daß aus der dreieckförmigen Streugutverteilung eine lineare Verteilung wird.

Fig.2 zeigt ein Streubild mit asymmetrischer Überlappung der Streufächer, um beispielsweise asymmetrische Düngergaben auf der Streubreite entsprechend dem lokalen Düngerbedarf des Bodens zu verwirklichen. Der von der Streuscheibe 1 erzeugte Streufächer 18 entspricht demjenigen beim Normalstreuen gemäß Fig.1. Es sind beide Dosieröffnungen 3, 4 in Funktion, so daß das Streugut mit einem Streuwinkel α von der Streuscheibe 1 abgegeben wird. Der Streuwinkel des Streufächers 19 der Streuscheibe 2 ist demgegenüber von innen nach außen reduziert, so daß eine Überlappung - beim gezeigten Ausführungsbeispiel - etwa nur auf der einen Hälfte der Streubreite erfolgt und dort eine größere Düngermenge abgelegt wird. Diese reduzierte Überlappung wird durch eine Reduzierung des Streuwinkels auf den Betrag β1 erreicht. Dies wiederum gelingt bei dem wiedergegebenen Drehsinn der Streuscheiben dadurch, daß die äußere Dosieröffnung 6 für die Streuscheibe 2 durch den Absperrschieber geschlossen wird, der Dünger also nur über die innere Dosieröffnung 5 aufgegeben wird. Der Düngermassenstrom und damit die Streumenge im Streufächer 19 wird ausschließlich durch die Dosieröffnung 5 bestimmt. Soll der Düngermassenstrom unverändert aufrechterhalten werden, wird der Dosierschieber entsprechend nachgeführt. Es läßt sich aber auch jede andere Streumenge auf diese Weise einstellen.

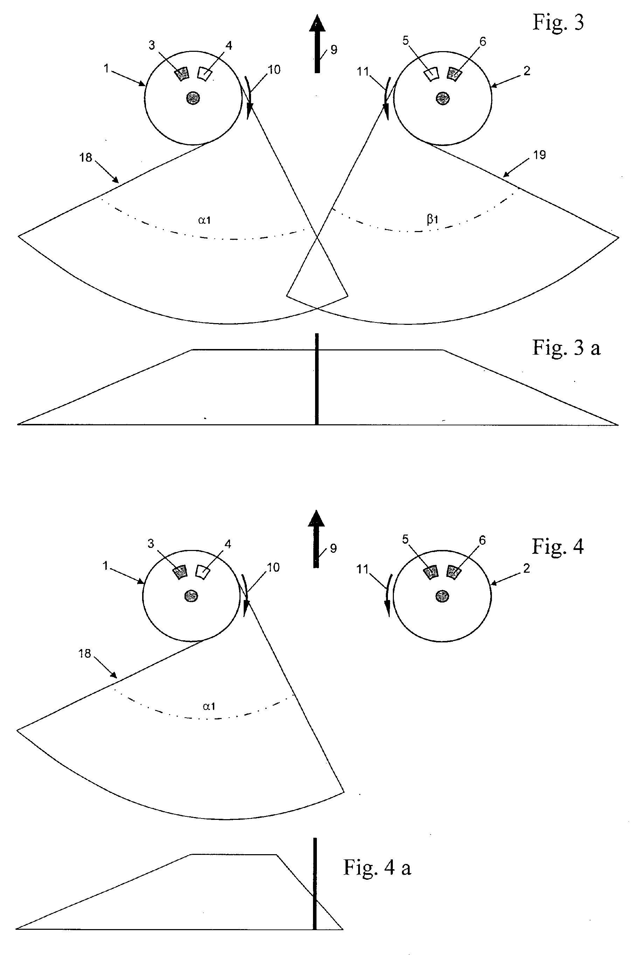

Bei der Arbeitsweise gemäß Fig.3 ist die Überlappung der beiden Streufächer weiterhin reduziert worden, indem auch der Streuwinkel des Streufächers der linken Streuscheibe 1 von innen nach außen reduziert wird. Dies gelingt beispielsweise durch die Reduzierung des Streuwinkels α auf den Streuwinkel α1. Auch hier wird die äußere Dosieröffnung 3 geschlossen und der Düngermassenstrom über die Dosieröffnung 4 nachgesteuert. Die Streufächer überlappen sich nur im Bereich zwischen den Streuscheiben und ergeben eine trapezförmige Streugutverteilung gemäß Fig.3a. Beim Anschlußfahren findet eine Überlappung nur im Bereich der geneigten Flanken der Streugutverteilung statt und wird dort die Verteilung auf das lineare Plateau angehoben. In diesem Fall können die von den beiden Streuscheiben abgegebenen Streumengen unterschiedlich sein, um die Düngermenge dem Bodenbedarf anzupassen.

Fig.4 zeigt eine Einstellung für das halbseitige Streuen, wobei der Streuwinkel α wiederum auf den Wert α1 reduziert wird, indem die äußere Dosieröffnung geschlossen und der Dünger nur über die innere Dosieröffnung 4 auf die Streuscheibe 1 aufgegeben wird, so daß der Streufächer 18 entsteht. Die Streugutverteilung stellt sich in diesem Fall als stark asymmetrisches Trapez gemäß Fig.4a dar. Die Streuscheibe 2 ist außer Funktion, indem beide Dosieröffnungen 5, 6 geschlossen sind.

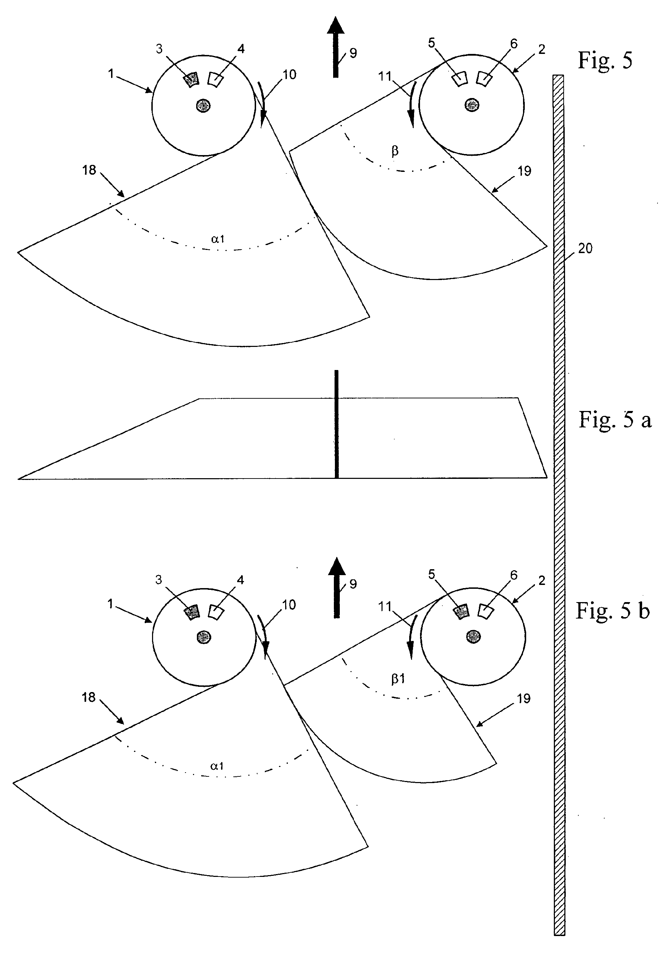

Fig.5 zeigt die Verhältnisse beim Streuen an einer symbolisch angedeuteten Feldgrenze 20. Der von der Streuscheibe 1 abgegebene Streufächer 18 entspricht im wesentlichen dem der Fig.3 und 4, während bei der grenznahen Streuscheibe 2 der Streufächer von außen nach innen verlagert wird. Dies kann beispielsweise durch Absenken der Drehzahl und/oder durch Verlagerung der Dosieröffnungen entgegen der Drehrichtung geschehen. Es ergibt sich dann eine Streugutverteilung gemäß Fig.5a mit einer steil abfallenden Flanke zur Grenze 20.

Die Arbeitsweise gemäß Fig.5b unterscheidet sich von der vorangegangenen dadurch, daß zusätzlich der Streuwinkel von außen nach innen reduziert worden ist, so daß der Streufächer 19 weiter nach innen verlagert wird.

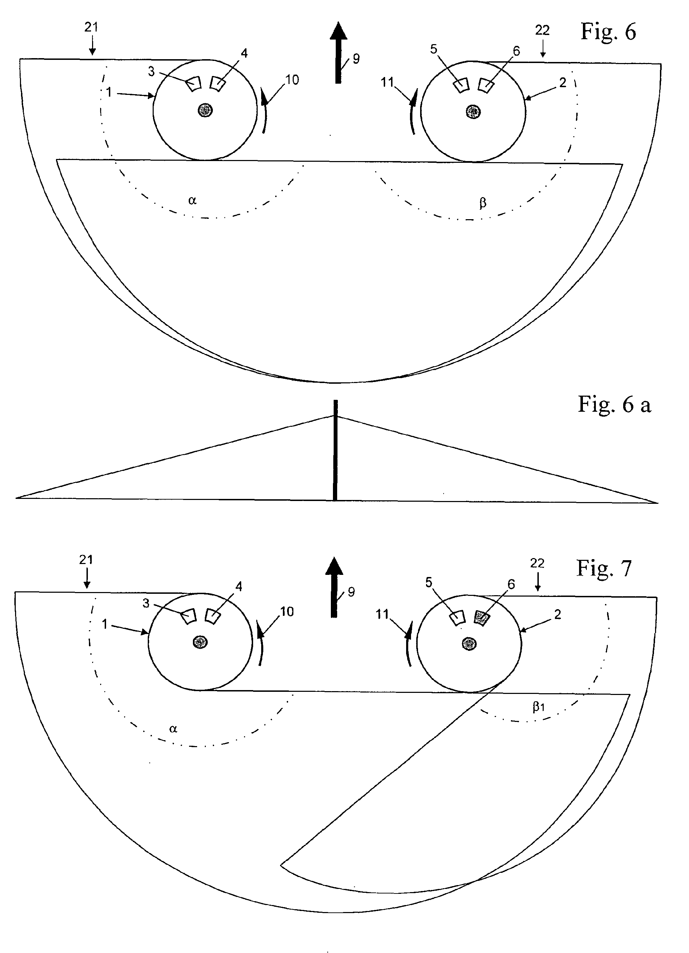

Die in Fig.6 bis 11 gezeigten Ausführungsbeispiele unterscheiden sich von denen der Fig.1 bis 5 nur durch den Drehsinn der Streuscheiben 1, 2, die auf den einander zugekehrten Seiten in Fahrtrichtung 9 umlaufen. Beim Normalstreuen (Fig.6) überlappen sich auch hier die Streufächer 21, 22 weitestgehend. Der Streuwinkel jedes Streufächers beträgt beim Normalstreuen etwa 180°. Die Streugutverteilung gemäß Fig.6a ist auch hier dreieckförmig.

Um auch bei diesem Drehsinn der Streuscheiben eine asymmetrische Düngergabe zu ermöglichen (Fig.7), wird der Streuwinkel einer Streuscheibe - beim gezeigten Ausführungsbeispiel der Streuscheibe 2 - von innen nach außen reduziert, indem beispielsweise die in Drehrichtung 11 äußere Dosieröffnung 6 geschlossen und der Düngermassenstrom ausschließlich über die Dosieröffnung 5 gesteuert wird. Diese Arbeitsweise entspricht derjenigen gemäß Fig.2.

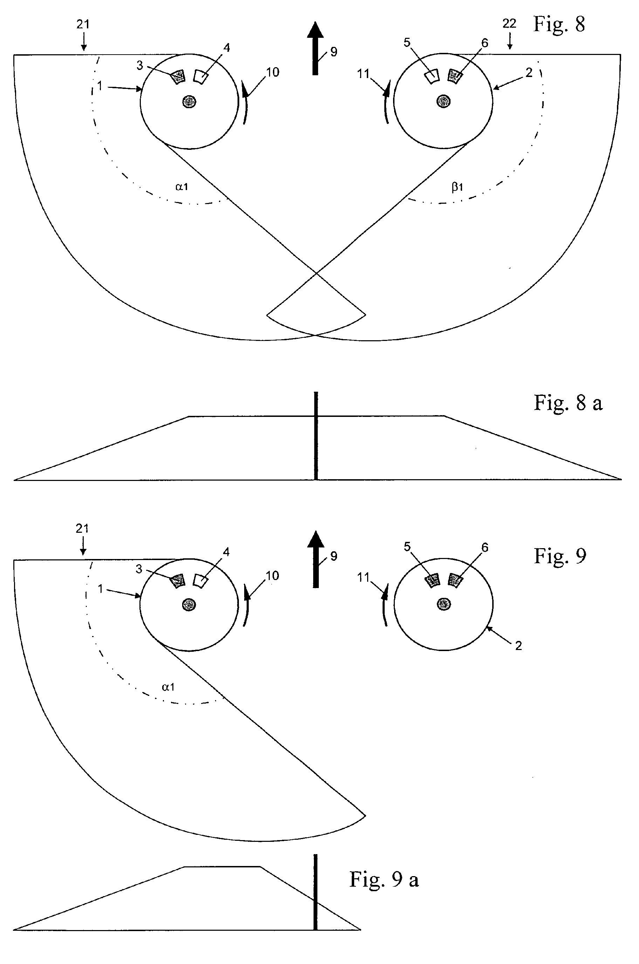

Bei dem Ausführungsbeispiel gemäß Fig.8 werden die Streuwinkel beider Streufächer von innen nach außen reduziert. Bei im übrigen symmetrischer Ausbildung der Streufächer bezüglich der Fahrtrichtung 9 ergibt sich wiederum ein trapezförmiges Streubild, wie in Fig.8a gezeigt. In diesem Fall wird der Streuwinkel durch Schließen der in Drehrichtung äußeren Dosieröffnungen 3 und 6 erreicht, während der Düngermassenstrom über die in Drehrichtung inneren Dosieröffnungen 4, 5 gesteuert wird.

In Fig.9 ist für diesen Drehsinn der Streuscheiben 1, 2 das halbseitige Streuen wiedergegeben, wobei die Dosieröffnungen 5, 6 der Streuscheibe 2 durch die Absperrschieber geschlossen sind, die Streuscheibe 2 also außer Funktion ist, während auf der anderen Streuscheibe 1 die in Drehrichtung äußere Dosieröffnung 3 geschlossen und der Düngermassenstrom über die innere Dosieröffnung 4 gesteuert wird. Es ergibt sich die in Fig.9a erkennbare trapezförmige Streugutverteilung mit starker Asymmetrie. Bei diesem halbseitigen Streuen findet beim Anschlußfahren eine Überlappung nur an der flachen Flanke gemäß Fig.9a statt.

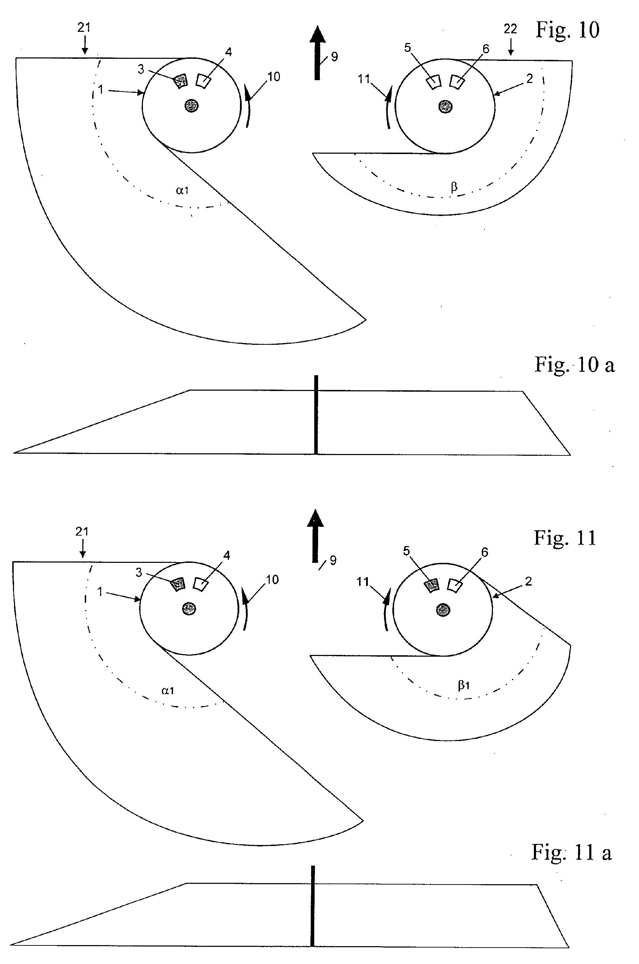

In Fig.10 und 11 ist ein Ausführungsbeispiel für das Grenzoder Randstreuen gezeigt. Der Streufächer 21 der grenzfernen Streuscheibe 1 wird lediglich im Streuwinkel reduziert, wie dies bereits in Bezug auf Fig.8 und 9 beschrieben ist. Die Streuscheibe 2 erzeugt einen Streufächer 22, der wiederum einen Streuwinkel von ca. 180° aufweist. Dabei ist jedoch die Wurfweite reduziert, beispielsweise durch Reduzierung der Drehzahl, durch Austausch der Streuscheibe gegen eine solche mit anders ausgebildeten und/oder anders angeordneten Wurfschaufeln oder durch Austausch lediglich der Wurfschaufeln selbst. Es entsteht eine Streugutverteilung gemäß Fig.10a mit einer zur Grenze steil abfallenden. Flanke.

Bei dem Ausführungsbeispiel gemäß Fig.11 entspricht der Streufächer 21 der Streuscheibe 1 wiederum demjenigen der Fig.10, während der von der Streuscheibe 2 erzeugte Streufächer zusätzlich einen von außen nach innen reduzierten Streuwinkel aufweist, der beispielsweise durch Schließen der Dosieröffnung 5 und Nachsteuern des Düngermassenstroms über die Dosieröffnung 6 erreicht wird. Hieraus ergibt sich ein zur Grenze noch steilerer Abfall der Streugutverteilung, wie in Fig.11a gezeigt ist.

## Patentansprüche

1. Verfahren zum Verteilen von Streugut mittels eines Zentrifugalstreuers mit einem Streugut-Behälter und wenigstens zwei gegensinnig umlaufenden, mit Wurfflügeln versehenen Streuscheiben, denen das Streugut über jeweils zwei getrennt steuerbare Dosieröffnungen am Behälter zugeführt wird und die das Streugut unter einem großen Streuwinkel abgeben derart, daß beim Normalstreuen auf einer einstellbaren Streubreite sich die von den beiden Streuscheiben erzeugten Streufächer in Fahrtrichtung hinter dem Zentrifugalstreuer symmetrisch im wesentlichen vollständig überlappen, **dadurch gekennzeichnet, daß** zur einseitigen Reduzierung der Überlappung der Streufächer der Streuwinkel wenigstens einer Streuscheibe durch Steuerung der ihr zugeordneten Dosieröffnungen von innen nach außen verkleinert wird, und daß zugleich der Streuwinkel und/oder die Streubreite an der anderen Streuscheibe reduziert wird.

2. Verfahren nach Anspruch 1, **dadurch gekennzeichnet, daß** der Streuwinkel der anderen Streuscheibe von innen nach außen verkleinert wird.

3. Verfahren nach Anspruch 2, **dadurch gekennzeichnet, daß** der Streuwinkel der anderen Streuscheibe durch Steuerung der ihr zugeordneten Dosieröffnungen verkleinert wird.

4. Verfahren nach einem der Ansprüche 1 bis 3, **dadurch gekennzeichnet, daß** zumindest die eine der beiden Dosieröffnungen auf der Seite des reduzierten Streuwinkels geschlossen und mit der anderen Dosieröffnung der für die Aufrechterhaltung der Streumenge maßgebliche Dünger-Massenstrom nachgeführt wird.

5. Verfahren nach einem der Ansprüche 1 bis 4, **dadurch gekennzeichnet, daß** zur Reduzierung des Streuwinkels der beiden Streuscheiben je eine der Dosieröffnungen auf beiden Seiten geschlossen wird, und mit der jeweils anderen Dosieröffnung der für die Aufrechterhaltung der Streumenge maßgebliche Dünger-Massenstrom nachgeführt wird.

6. Verfahren nach einem der Ansprüche 1 bis 5, **dadurch gekennzeichnet, daß** bei Zentrifugalstreuern, deren Streuscheiben auf den einander zugekehrten Seiten in Fahrtrichtung umlaufen, zumindest die in Drehrichtung zweite Dosieröffnung auf der Seite mit dem reduzierten Streuwinkel geschlossen wird.

7. Verfahren nach Anspruch 5 oder 6, **dadurch gekennzeichnet, daß** jeweils die in Drehrichtung zweiten Dosieröffnungen auf beiden Seiten geschlossen werden.

8. Verfahren nach einem der Ansprüche 1 bis 5, **dadurch gekennzeichnet, daß** bei Zentrifugalstreuern, deren Streuscheiben auf den einander zugekehrten Seiten entgegen der Fahrtrichtung umlaufen, zumindest die in Drehrichtung erste Dosieröffnung auf der Seite des reduzierten Streuwinkels geschlossen wird.

9. Verfahren nach Anspruch 8, **dadurch gekennzeichnet, daß** jeweils die in Drehrichtung ersten Dosieröffnungen auf beiden Seiten geschlossen werden.

10. Verfahren nach einem der Ansprüche 1 bis 9, **dadurch gekennzeichnet, daß** zum halbseitigen Streuen die beiden auf dieser Seite liegenden Dosieröffnungen geschlossen werden.

11. Verfahren nach einem der Ansprüche 1 bis 10, **dadurch gekennzeichnet, daß** zur Lageveränderung des Streuwinkels der Aufgabepunkt des Streugutes auf der Streuscheibe verlagert wird.

12. Verfahren nach einem der Ansprüche 1 bis 10, **dadurch gekennzeichnet, daß** zur einseitigen Reduzierung der Streubreite die Drehzahl der Streuscheibe auf dieser Seite reduziert wird.

13. Verfahren nach Anspruch 12, **dadurch gekennzeichnet, daß** zugleich der Aufgabepunkt des Streugutes auf der Streuscheibe entgegen der Drehrichtung verlagert wird, indem beide Dosieröffnungen entgegen der Drehrichtung der Streuscheibe verlagert werden.

14. Verfahren nach einem der Ansprüche 11 bis 13, **dadurch gekennzeichnet, daß** zugleich auf der anderen Seite der Streuwinkel von innen nach außen reduziert wird.

15. Verfahren nach einem der Ansprüche 1 bis 14, **dadurch gekennzeichnet, daß** zur einseitigen Reduzierung der Streubreite der Streufächer dieser Streuscheibe durch Leiteinrichtungen von außen nach innen eingeengt wird.

16. Verfahren nach Anspruch 15, **dadurch gekennzeichnet, daß** zugleich der Streuwinkel von außen nach innen reduziert wird.

17. Zentrifugalstreuer zur Durchführung des Verfahrens nach einem der Ansprüche 1 bis 16 mit einem Streugut-Behälter, wenigstens zwei darunter angeordneten, gegensinnig umlaufenden Streuscheiben mit Wurfflügeln, denen jeweils zwei steuerbare Dosieröffnungen im Behälter zugeordnet sind, wobei den Dosieröffnungen getrennt steuerbare Dosierschieber und Absperrschieber zugeordnet sind, **dadurch gekennzeichnet, daß** den beiden Dosieröffnungen jeder Streuscheibe ein gemeinsamer Dosierschieber und wenigstens einer Dosieröffnung ein Absperrschieber zugeordnet ist.

18. Zentrifugalstreuer nach Anspruch 17, **dadurch gekennzeichnet, daß** die Dosieröffnungen im horizontalen Boden des Streugut-Behälters angeordnet sind und die Dosierund Absperrschieber am Boden angebracht sind.

19. Zentrifugalstreuer nach Anspruch 18, **dadurch gekennzeichnet, daß** der Boden um eine mit der Achse der Streuscheiben zusammenfallende Achse drehbar ist.

20. Zentrifugalstreuer nach Anspruch 17 bis 19, **dadurch gekennzeichnet, daß** die Dosier- und Absperrschieber zusammen mit dem Boden verdrehbar sind.

21. Zentrifugalstreuer nach einem der Ansprüche 17 bis 20,
**dadurch gekennzeichnet, daß** der Dosierschieber und der Absperrschieber je ein Stellglied mit Antrieb aufweisen und beide Antriebe so miteinander gekoppelt sind, daß bei Bewegung des Absperrschiebers zum Schließen der einen Dosieröffnung zugleich der Dosierschieber die andere Dosieröffnung zur Beibehaltung des voreingestellten Massenstroms weiter öffnet.

22. Zentrifugalstreuer nach einem der Ansprüche 17 bis 21 mit je einem den Dosieröffnungen für beide Streuscheiben zugeordneten und im Behälter angeordneten Rührwerken, **dadurch gekennzeichnet, daß** jedes Rührwerk von einem im Behälter angeordneten Hydromotor angetrieben ist.

23. Zentrifugalstreuer nach Anspruch 22, **dadurch gekennzeichnet, daß** die Hydromotoren unabhängig voneinander drehzahlsteuerbar sind.

24. Zentrifugalstreuer nach einem der Ansprüche 17 bis 23, **dadurch gekennzeichnet, daß** bei Streuscheiben, die an den einander zugekehrten Seiten entgegen der Fahrtrichtung umlaufen, der Abstand der Drehachsen der Streuscheiben wenigstens 10cm größer als der äußere Flugkreisdurchmesser der Streuscheiben ist.

25. Verfahren nach einem der Ansprüche 17 bis 23, **dadurch gekennzeichnet, daß** der Abstand der Drehachsen wenigstens 50cm größer als der äußere Flugkreisdurchmesser der Streuscheiben ist.

26. Zentrifugalstreuer nach einem der Ansprüche 17 bis 22, **dadurch gekennzeichnet, daß** der Abstand der Drehachsen wenigstens 80cm größer als der äußere Flugkreisdurchmesser der Streuscheiben.

27. Zentrifugalstreuer nach einem der Ansprüche 17 bis 22, **dadurch gekennzeichnet, daß** der Abstand der Drehachsen wenigstens doppelt so groß ist wie der äußere Flugkreisdurchmesser der Streuscheiben.
